# EUROPÄISCHE PATENTSCHRIFT

(11) **EP 3 095 016 B1**
(45) Veröffentlichungstag und Bekanntmachung des Hinweises auf die Patenterteilung: **26.09.2018**
(21) Anmeldenummer: 15707256.2
(22) Anmeldetag: 14.01.2015
(51) Int. Cl.: G05B 19/18, G05D 1/02, B60L 11/18, B60R 11/04, B66F 9/06, G05D 1/00

(54) **VORRICHTUNG ZUR ORIENTIERUNG FÜR AUTOMATISCH IN WERKSHALLEN GEFÜHRTE, ELEKTRISCH BETRIEBENE, TRANSPORTFAHRZEUGE**
ORIENTATION DEVICE FOR ELECTRICALLY DRIVEN TRANSPORT VEHICLES AUTOMATICALLY GUIDED IN FACTORY BUILDINGS
DISPOSITIF PERMETTANT D'ORIENTER DES VÉHICULES DE TRANSPORT À ENTRAÎNEMENT ÉLECTRIQUE GUIDÉS AUTOMATIQUEMENT DANS DES ATELIERS D'USINE

(30) Priorität: 14.01.2014 DE 102014000375
(43) Veröffentlichungstag der Anmeldung: 23.11.2016
(73) Patentinhaber: Grenzebach Maschinenbau GmbH, 86663 Asbach-Baeumenheim (DE)
(72) Erfinder: DEUTSCHER, Reiner, 76149 Karlsruhe (DE); BAIER, Gunar, 68219 Mannheim (DE)
(74) Vertreter: Kindermann, Peter
(86) Internationale Anmeldenummer: PCT/DE2015/000011
(87) Internationale Veröffentlichungsnummer: WO 2015/106755

(56) Entgegenhaltungen:
- DE-U1-202007 012 798
- DE-U1-202013 008 718
- US-A- 4 345 662
- Ewgenij Gawrilow ET AL: "Dynamic Routing of Automated Guided Vehicles in Real-time" In: "Mathematics - Key Technology for the Future", 1. Januar 2008 (2008-01-01), Springer Berlin Heidelberg, Berlin, Heidelberg, XP55189051, ISBN: 978-3-54-077202-6 Seiten 165-177, DOI: 10.1007/978-3-540-77203-3_12, das ganze Dokument

## Beschreibung

Die vorliegende Erfindung betrifft eine Vorrichtung zur Orientierung für automatisch in Werkshallen geführte, elektrisch betriebene, Transportfahrzeuge und ein Verfahren zum störungsfreien Betrieb solcher Fahrzeuge.

In einer Vielzahl von Unternehmensbereichen, zum Beispiel dem Handel mit Lebensmitteln und Haushaltsartikeln oder Industrie- und Haushaltsprodukten, liegen Waren in sortenreinen Quellpaletten mit gleichartigen Gebinden in Lastregalen vor. Ein Gebinde kann hierbei ein verpacktes oder unverpacktes Stückgut oder eine Warenzusammenstellung wie beispielsweise eine Kiste, ein Karton oder eine Steige mit Schüttgut oder mehreren Einzelgütern wie Getränkeflaschen oder Molkereiprodukten sein. Zur Zusammenstellung einer Lieferung an einen bestimmten Kunden müssen hieraus Pakete mit unterschiedlicher Bestückung oder Gebinden zusammengestellt werden.

Das Herbeischaffen einzelner Bestandteile einer solchen Lieferung kann hierbei händisch erfolgen oder mittels automatisch geführter Fahrzeuge. Solche so genannten AGV's (automatic guided vehicles) können mobile Roboter oder speziell für den jeweiligen Verwendungszweck konstruierte Fahrzeuge sein, die mit einem speziellen Führungs- und Steuerungsverfahren von einem Ort zu einem anderen Ort bewegt werden.

Herkömmliche automatisch geführte Fahrzeuge, mit denen zum Beispiel Materialien in Fabriken und Lagerhäusern bewegt werden, weisen eine minimale Punkt-zu-Punkt-Bewegungssteuerung auf. Die meisten solcher Systeme verwenden AGV's, die einer festen Leitspur folgen. Im Allgemeinen handelt es sich hierbei um einen Hochfreguenz-Sendeantennendraht, der im Fabrikboden versenkt angeordnet ist, einen auf den Boden aufgemalten reflektierenden Streifen, oder ein auf den Boden aufgeklebtes reflektierendes Band. Solche Leitspuren sind jedoch ersichtlich sehr verletzlich und unzuverlässig.

Alle diese Bewegungssteuerungen begrenzen die Bewegungsfreiheit der einzelnen AGV's, indem diese gezwungen werden einem physikalisch festgelegten Weg zu folgen.

Die meisten solcher Systeme verlassen sich auf die fahrzeugeigene Annäherungs-Detektion um Kollisionen mit anderen Fahrzeugen, unbewegten Objekten oder menschlichem Personal zu vermeiden. In solchen Systemen können sich die AGV's nur in einer Richtung längs der von ihnen verfolgten Spur bewegen.

Solche Systeme erreichen eine Punkt-zu-Punkt-Bewegung durch Implementieren von Steuerschemata und Verwenden frei beweglicher AGV's mit programmierbaren bidirektionalen Wegen.

Aus der Druckschrift DE 20 2013 008 718 U1 ist ein Transportfahrzeug zum störungsfreien Transport von Lastregalen in Werkshallen mit Funkabschattungen und mit teilweise autonomem Fahrbetrieb bekannt, wobei Kameras und Ultraschallsensoren verwendet werden.

Ferner ist aus der Druckschrift US 4 345 662 A eine Vorrichtung und ein Verfahren zur Orientierung von AGVs bekannt, wobei zur Kollisionsvermeidung vordere und hintere Ultraschallsensoren und zur Erfassung von Bodenmarkierungen optische Sensoren verwendet werden.

Zum Stand der Technik ist weiterhin aus der DE 20 2007 012 798 U1 ein Positioniersystem mit einem Fahrzeug bekannt, dem die Zielrichtung zugrunde liegt, ein Positioniersystem zu schaffen, welches im Auflichtverfahren arbeiten kann, eine gegenüber dem Stand der Technik stark verbesserte Positionsauflösung ermöglicht, gleichzeitig sehr viel längere Fahrwege erlaubt und eine Positionsbestimmung auch bei stillstehendem Fahrzeug nicht ausschließt.

Zu diesem Zweck wird hier unter anderem ein Positioniersystem beansprucht, das im Wesentlichen die folgenden Komponenten aufweist:
A) ein Fahrzeug welches mittels eines Antriebs wenigstens eindimensional in X-Richtung entlang eines Fahrwegs oder auf einer Bahn verfahrbar ist,
B) wenigstens ein Display, welches in der Umgebung des Fahrzeugs angeordnet ist, nicht an dessen Bewegung teilnimmt und auf welchem wenigstens ein Marker darstellbar ist,
C) eine Kamera, insbesondere CCD-Kamera, deren Lage bezüglich des Fahrzeugs in X - Richtung bekannt ist und welche an dem Fahrzeug vorzugsweise starr angeordnet ist, an dessen Bewegung teilnimmt und durch Verfahren des Fahrzeugs so positionierbar ist, dass der auf dem Display dargestellte Marker im Erfassungsbereich der Kamera liegt und somit von der Kamera als innerhalb des Bildfeldes der Kamera liegendes Markerbild abgebildet wird.
D) eine an die Kamera angeschlossene EDV-Einrichtung, welche imstande ist, mittels eines Bildverarbeitungsprogramms aus der Lage des Markerbildes im Bildfeld der Kamera die X-Komponente der Relativposition des Fahrzeugs bezüglich des auf dem Display dargestellten Markers zu bestimmen und das Ergebnis dazu heranzuziehen, mit Hilfe des Antriebs das Fahrzeug an einer bezüglich des Displays oder Markers vorgegebenen X-Sollposition oder innerhalb eines vorgegebenen Toleranzbereichs um die X-Sollposition in X-Richtung zu positionieren.

Im Anspruch 5 wird hierzu beansprucht, dass der auf dem Display dargestellte Code-Träger ein eindimensionaler Barcode oder ein zweidimensionaler Barcode oder ein Data-Matrix-Code ist.

Um ein vergleichbares Fahrzeug mit elektrischer Energie zu versorgen ist aus der DE 10 2010 050 935 B4 eine Vorrichtung zur berührungslosen Energieübertragung an ein Fahrzeug bekannt.

Zum Erreichen einer möglichst leistungsfähigen Energieübertragung wird in dieser Druckschrift eine Vorrichtung zur berührungslosen Energieübertragung von einer Spulenanordnung an eine in einem Fahrzeug vorgesehene Sekundärwicklung beansprucht, die durch die folgenden Merkmale gekennzeichnet ist, nämlich dass die Spulenanordnung ein Kunststoffteil aufweist, das an einem ebenen Oberflächenbereich einen vertieften Bereich aufweist, in welchem die Spulenwicklung angeordnet ist, wobei auf dem ebenen Oberflächenteil ein ebener Ferritbereich angeordnet ist und wobei das Kunststoffteil einen derartig erhöhten Randbereich aufweist, dass ein wannenförmiger Bereich gebildet ist, welcher auch den vertieften Bereich umfasst. Ferner wird hier beansprucht, dass der wannenförmige Bereich mit Vergussmasse derart vergossen ist, dass die Spulenwicklung im vertieften Bereich samt des Ferritbereichs mit Vergussmasse vergossen ist, wobei die Spulenanordnung derart an einem Boden angeordnet ist, dass die Spulenanordnung vom Fahrzeug, insbesondere von Rädern des Fahrzeugs überfahrbar ist, wobei die Vergussmasse auf der vom Fahrzeug abgewandten Seite des Kunststoffteils angeordnet ist.

Aus der den Oberbegriff des Patentanspruchs 1 und 4 bildenden Druckschrift DE 20 2007 012 798 U1 sind eine Vorrichtung und ein Verfahren zur Orientierung für automatisch in Werkshallen geführte, elektrisch betriebene, Transportfahrzeuge, insbesondere so genannte AGV's (automatic guided vehicles), mit einem Laser-Scanner und einem Lichtfeldsensor als Positioniersystem bekannt, welches im Auflichtverfahren arbeiten kann und bereits eine verbesserte Positionsauflösung ermöglicht.

Der Erfindung liegt die Aufgabe zugrunde, eine Vorrichtung und ein Verfahren zur Orientierung für automatisch in Werkshallen geführte, elektrisch betriebene, Transportfahrzeuge zu schaffen, mit dem der schnelle und störungsfreie Transport von Lastregalen weiter verbessert werden kann.

Erfindungsgemäß wird diese Aufgabe hinsichtlich der Vorrichtung durch die Merkmale des neuen Patentanspruchs 1 und hinsichtlich des Verfahrens durch die Maßnahmen des neuen Patentanspruchs 4 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
Fig. 1: eine Werkshalle mit Transportlafetten,
Fig. 2: eine Darstellung des verwendeten Datamatrixcodes
Fig. 3: Möglichkeiten von Korrekturen einer gewählten Route,
Fig. 4: eine Seitenansicht eines AGV mit einer Hubplatte
Fig. 5: eine Detailansicht der Datamatrix - Kamera
Fig.6: eine Darstellung eines Datamatrixcodes auf einer Ladematte

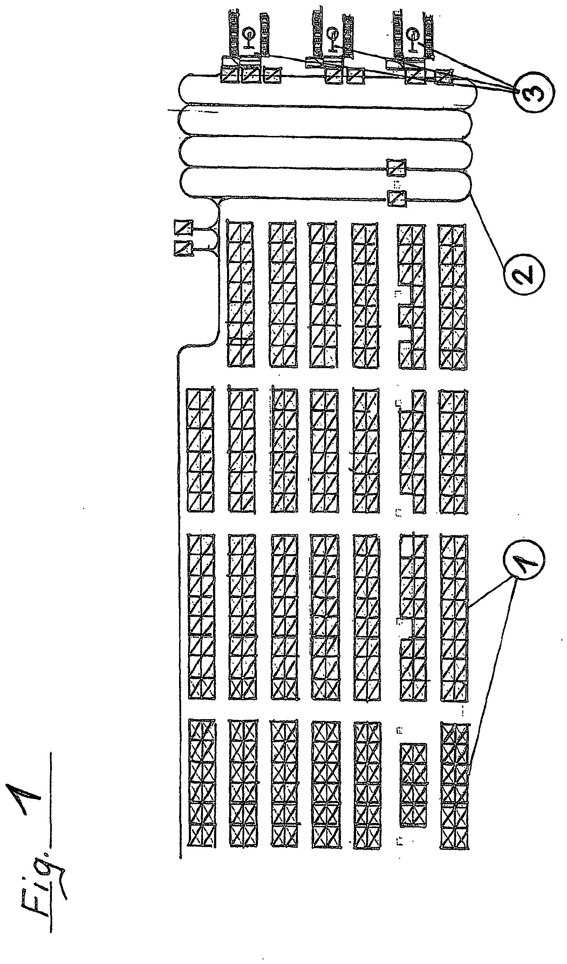

Die Fig.1 zeigt eine Werkshalle mit Transportlafetten. Hier ist ein Ausschnitt aus einer mehr oder weniger großen Werkshalle mit Transportlafetten 1 dargestellt. Zur Zusammenstellung der für eine Lieferung benötigten Waren dienen Kommissionier - Stationen 3. Treten bei der Arbeit an den Kommissionier - Stationen Wartezeiten auf, warten die entsprechenden Transportlafetten 1 im Bereich von Warteschleifen 2, die mit, im Boden verlegten, Induktionsleitungen ausgestattet sind um solche Wartezeiten zum Aufladen von elektrischen Akkumulatoren der jeweils verwendeten AGV - Systeme zu nutzen.

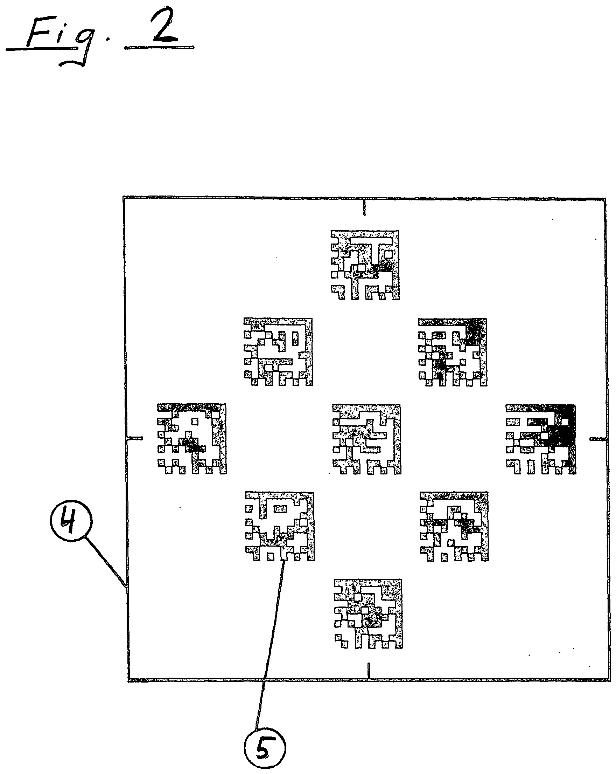

Die Fig.2 zeigt eine Darstellung des verwendeten Datamatrixcodes. Mit 4 ist hier der Datamatrixcode - Träger und mit 5 der gewählte Code selbst bezeichnet.

Neben der Markierung von Waren oder Standorten ist ein Datamatrixcode als Marker bekannt. Ein Datamatrixcode wird hierbei auf dem Boden, oder einer anderen Unterlage, befestigt und bei Überfahrt mit einem Fahrzeug durch eine am Fahrzeug angebrachte, nach unten gerichtete, Kamera detektiert. In dem jeweiligen Marker werden Informationen kodiert, die zum Beispiel die Lage des Ortes betreffen und / oder spezielle anderweitige Informationen enthalten.

Ein Datamatrixcode besteht aus hellen oder dunklen Zellen, die als Datenmatrix angeordnet sind. Die einzelnen Zellen sind quadratisch ausgelegt und sollten eine Toleranz von plus oder minus 10% nicht überschreiten.

Grundsätzlich werden bei einem Datamatrixcode die Position der einzelnen Zellen (Lage) und die Füllung einer Zelle bewertet, wobei eine schwarze Zelle binär Eins und eine weiße Zelle binär Null entspricht.

Der Datamatrixcode wird durch zwei Suchelemente begrenzt, die zur Lageerkennung bei der Lesung des Codes dienen. Suchelemente sind eine waagrechte und eine senkrechte Begrenzungslinie, die L - förmig zueinander stehen. Die Suchelemente dienen weiterhin zur Erkennung von Verzerrungen und zur Größenbestimmung. Die beiden unterbrochenen Linien (alternating grid oder Taktzellen) gegenüber den Suchelementen dienen als Basis zur Erstellung der Datenmatrix. Die Suchelemente und die Taktzellen umrahmen den Bereich der Nutzdaten. Dieser Bereich enthält auch die redundanten Daten für die Datensicherheit, die nach dem Reed Solomon Fehlerkorrektur - Algorithmus berechnet wird.

Unter Nutzung der bekannten Datamatrix - Technologie wird gemäß der der Fig.2 eine neuartige Anordnung eines Markers geschaffen, bei dem ein Positionsmarker aus einer Anordnung aus neun Datamatrixcodes aufgebaut wird. Diese Datamatrixcodes sind in einem Quadrat angeordnet, wobei jeweils die Diagonalen von 3 Einzelcodes auf einer Geraden liegen.

Hierbei werden zunächst für alle Einzel - Codes dieselben Informationen zur Lage des Orts und zur Charakterisierung des Ortes codiert.

Zusätzlich wird ein weiteres Zeichen codiert, sodass jeder Einzelcode eine eindeutig zuordenbare Erkennung hat.

Mittels der auf einem, den gezeigten Marker überfahrenden, Fahrzeug befindlichen sensorischen Einrichtungen werden beim Überfahren ein oder mehrere Einzel - Codes detektiert. Durch bekannte Bilderkennungsverfahren (wie zum Beispiel Data Matching) werden hierbei sowohl die gespeicherten Informationen als auch die relative Orientierung von Kamera und Code detektiert.

Befindet sich die gezeigte neuartige Anordnung eines Markers an einem Kreuzungspunkt verschiedener Fahr - Routen kann dieser Code aus allen 4 Richtungen gleich gut gelesen werden. Bei einer Drehung eines den Code überfahrenden Fahrzeugs im Codemittelpunkt können die Sensordaten (Drehwinkel) zur Positionierung des Fahrzeugs herangezogen werden.

Abweichungen von einer geplanten Route können dadurch erkannt werden, dass der Informationsgehalt der jeweils erkannten Codes ausgewertet wird.

Auf diese Weise kann eine seitliche Abweichung von der Mittellinie und / oder eine Abweichung im Fahrwinkel von einer gewählten Route detektiert werden. Diese Informationen ermöglichen eine sofortige Korrektur der gewählten Route.

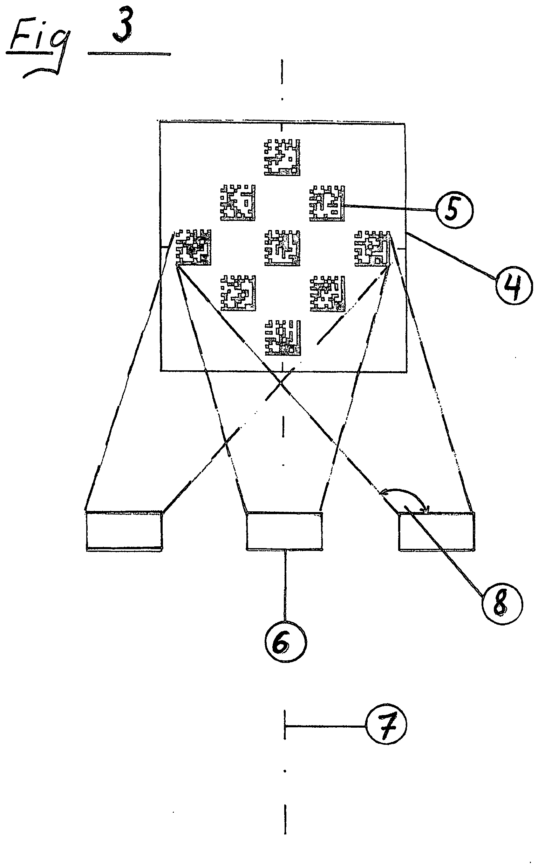

Fig.3 zeigt Möglichkeiten von Korrekturen einer gewählten Route. Es ist hier wieder der Datamatrixcode - Träger 4 mit dem speziellen Datamatrixcode 5 gezeigt. Die Ideallinie 7 einer Fahrspur, wie sie sich der Kamera 6 eines AGV zeigen würde, ist in der Mitte dargestellt. Links und rechts von der Ideallinie 7 ist jeweils eine Fahrspur gezeigt, die einen bestimmten Versatzwinkel in Bezug auf die Ideallinie 7 aufweist.

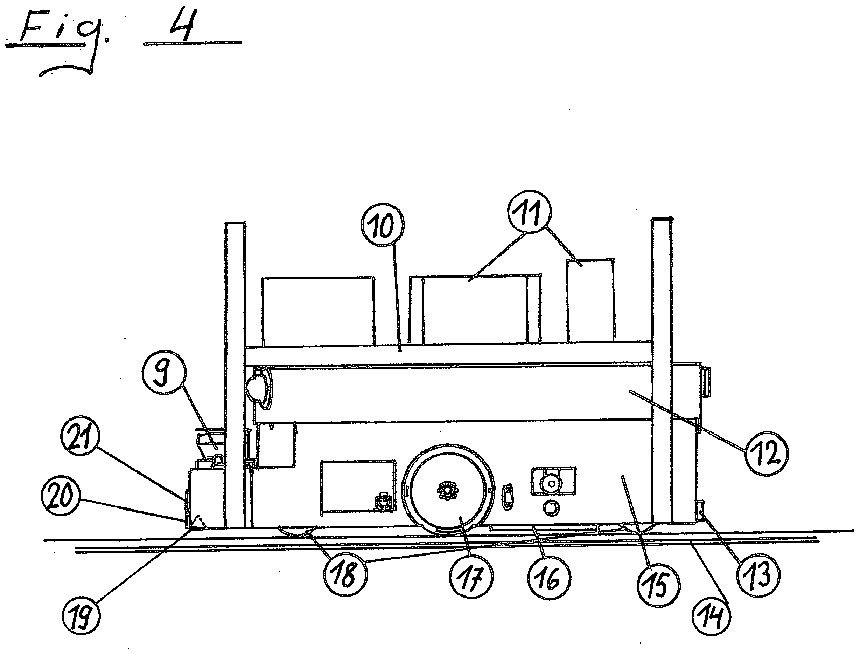

Fig.4 zeigt eine Seitenansicht eines AGV mit einer Hubplatte.

Das AGV -Gehäuse 15 weist eine Hubplatte 12 mit einem aufliegenden Transportregal 10 mit Kommissionierware 11 auf. In der Mitte des AGV ist eines der beiden Antriebsräder 17, begleitet von zwei Stützrollen 18, zu erkennen. In diesem Bereich ist im Boden eine Induktionsleitung 14 und am Fahrzeug ein Induktions - Stromabnehmer 16 dargestellt.

Der Identifizierung der Informationen eines Datamatrixcodes dient eine Datamatrix - Kamera 19. Ein vorderer Ultraschallsensor 20 und ein hinterer Ultraschallsensor 13 erkennen hinderliche Strukturen im bodennahen Bereich, auch bei einer Rückwärtsfahrt.

In einer besonderen Ausführungsform können in diesen Bereichen kleine, aber dennoch den Fahrbetrieb störende, am Boden liegende Steinchen oder sonstige Hindernisse, mittels Luftdüsen durch impulsartige Luftstöße aus dem Weg geräumt werden.

Solche kleinen Hindernisse können besonders bei AGV's mit schweren Lasten zu Schwierigkeiten führen.

Ein Laser - Scanner 9 an der Vorderseite des AGV erfasst weiträumig und detailliert relevante Orientierungs - Strukturen.

An der Vorderseite des Transportfahrzeugs ist ferner ein Lichtfeldsensor 21 angebracht. Die mittels dieses optischen Sensors erfassten Informationen können vorteilhaft dazu herangezogen werden, nach der eigentlichen Aufnahme ein Bild mit einer an beliebiger Position platzierten Schärfenebene zu berechnen und darzustellen oder auszuwerten. Somit kann derselbe optische Sensor sowohl zur scharfen Darstellung von sehr nahe gelegenen Gegenständen als auch zur scharfen Darstellung von sehr weit entfernten Gegenständen verwendet werden, wobei darüber hinaus beide Darstellungen aus denselben gewonnenen Informationen errechnet werden können. Die Bereitstellung eines aufwendigen Linsen-, Zoom- oder Autofokussystems als optischer Sensor ist dabei hinfällig. Darüber hinaus können dieselben erfassten Daten zur gleichzeitigen Berechnung unterschiedlicher Bilddarstellungen, jeweils mit unterschiedlichen Bildausschnitten und unterschiedlichen Schärfeebenen und Schärfetiefe - Bereichen, herangezogen werden.

Hinsichtlich des verwendeten Lichtfeldsensors 21, wird auf die neue Entwicklung der so genannten Minilinsen verwiesen, die in der Form von hunderten von Minilinsen nach dem Lichtfeldprinzip optische Informationen sammeln, die dann später zu Bildern mit einer gewünschten Auflösung und / oder einem gewünschten Blickwinkel datentechnisch zusammengestellt werden können. Solche Minilinsen sind 3 - D - fähig, billig herzustellen und folgen dem Prinzip eines Insektenauges.

Im Verbund mit dem Laser - Scanner 9 ist es dem Transportfahrzeug leichter möglich zwischen der Ansammlung an Transportregalen zu navigieren und unerwartet auftauchenden Hindernissen adäquat zu begegnen.

Das hier vorgestellte System zur Orientierung kann für alle Arten von AGV's verwendet werden. Besonders wird hier noch auf ein AGV für den Transport von schweren Lasten mittels einer Hebeanordnung bestehend aus drei Hubdornen verwiesen.

Die zum Betrieb des Orientierungssystems notwendigen elektronischen Einrichtungen sind dem Fachmann geläufig und nicht näher beschrieben.

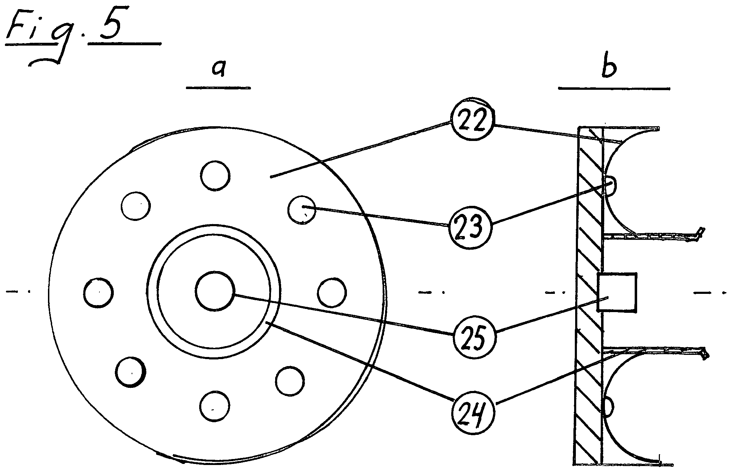

Fig.5 zeigt eine Detailansicht der Datamatrix - Kamera. Hierbei ist im Bildteil a).zu erkennen, dass die eigentliche Kamera 25 zur Beleuchtung des Detektionsfeldes von einer kreisförmig angeordneten Vielzahl von LEDs 23 umgeben ist, wobei die Kamera 25 gegen Streulicht mittels eines Zylinders 24 abgeschirmt ist. Im Bildteil b) wird ersichtlich, dass jede LED zusätzlich von einem ringförmigen Reflektor 22 umgeben ist.

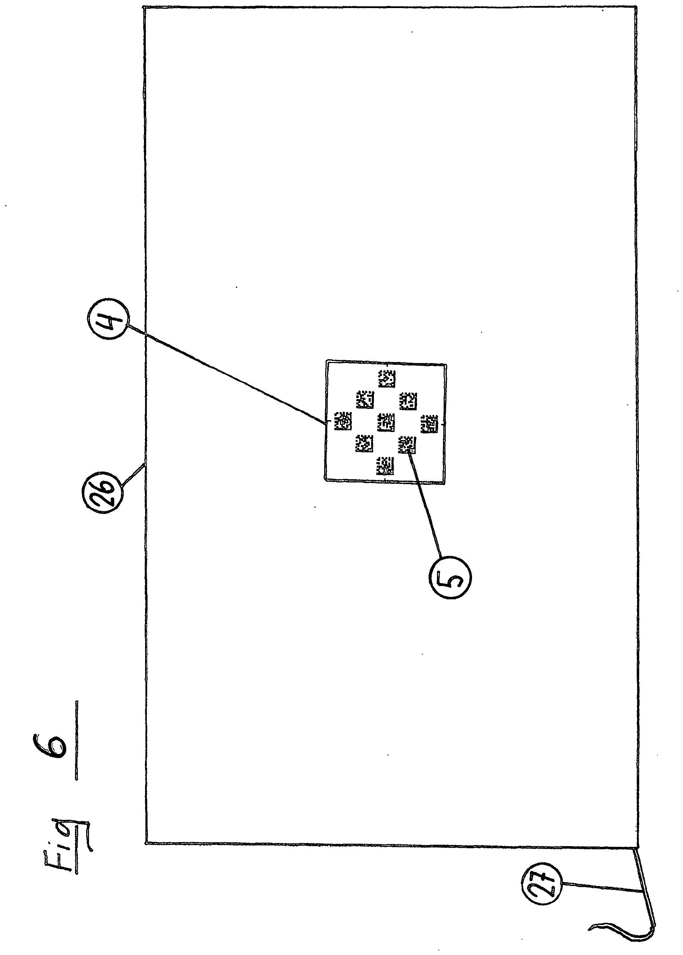

Fig.6 zeigt eine Darstellung eines Datamatrixcodes auf einer Ladematte.

Eine Ladematte ist eine besonders ausgebildete flächenhafte Struktur die in ihrem Inneren eine, die ganze Fläche bedeckende, geschlossene Leiterbahn aufweist die einem Fahrzeug ermöglicht mittels eines geeigneten Stromabnehmers induktiv elektrische Energie aufzunehmen. Diesem Zweck dient eine Steuerungs - und Energieversorgungsleitung 27 für eine Ladematte 26. Zur Erkennung der Ladematte 26 ist im zentralen Bereich der Ladematte 26 ein Datamatrix - Träger 4 angeordnet der einen diesbezüglichen Datamatrixcode 5 aufweist.

Zur Steuerung der beschriebenen Transportfahrzeuge wird bevorzugt ein bekanntes Verfahren eingesetzt das von der Technischen Universität Berlin entwickelt wurde und am 10. Oktober 2007 veröffentlicht wurde unter:
Dynamic Routing of Automated Guided Vehicles in Real -time.
(Ewgenij Gawrilow, Ekkehard Köhler, Rolf H.Möhring, Björn Stenzel)
[http://www.math.tu-berlin.de/coga/publications/techreports/]

Es handelt sich hierbei im Wesentlichen um einen zweiteiligen Algorithmus, dessen erster Teil einen vorbereitenden Schritt umfasst und dessen zweiter Teil in Echtzeit eine Route berechnet und dabei für jeden Abschnitt ein bestimmtes Zeitfenster vorsieht

Die Anwendung des hier beschriebenen Verfahrens betraf ein AGV - Netzwerk im Container - Terminal Altenwerder im Hamburger Hafen. Die Anwendung desselben Verfahrens zum störungsfreien Betrieb von Automated Guided Vehicles in einem Warenhaus erscheint dagegen neu.

Die Steuerung der komplexen Bewegungsvorgänge und die Signalverarbeitung der verwendeten Sensoren erfordern ein spezielles Steuerungsprogramm.

### Bezugszeichenliste

- 1: Transportlafetten
- 2: Induktionsleitungen in einer Warteschleife
- 3: Kommissionier - Stationen
- 4: Datamatrixcode - Träger
- 5: Datamatrixcode
- 6: Kamera eines AGV
- 7: Ideallinie einer Fahrspur
- 8: Versatzwinkel einer Fahrspur
- 9: Laser - Scanner
- 10: Transportregal
- 11: Kommissionierware
- 12: Hubplatte
- 13: Hinterer Ultraschallsensor
- 14: Induktionsleitung
- 15: AGV - Gehäuse
- 16: Induktions - Stromabnehmer
- 17: Antriebsrad
- 18: Stützrolle
- 19: Datamatrix - Kamera
- 20: vorderer Ultraschallsensor
- 21: Lichtfeldsensor
- 22: Reflektor
- 23: LED
- 24: Zylinder
- 25: Kamera
- 26: Ladematte
- 27: Steuer - und Energieversorgungsleitung

## Patentansprüche

1. Vorrichtung zur Orientierung für automatisch in Werkshallen geführte, elektrisch betriebene, Transportfahrzeuge, insbesondere so genannte AGV's (automatic guided vehicles), mit einem Laser-Scanner (9) und einem Lichtfeldsensor (21), **gekennzeichnet durch**
a) eine Kamera (6, 19, 25) zur Identifikation von Stützpunkten einer Routenplanung mittels Positionsmarkern (4), wobei die Positionsmarker (4) als Datamatrixcode-Träger ausgebildet sind, die aus einer Anordnung aus neun Datamatrixcodes (5) aufgebaut sind, die in einem Quadrat angeordnet sind, und wobei die Diagonalen von 3 Einzelcodes auf einer Geraden liegen, und
b) einen vorderen Ultraschallsensor (20) und einen hinteren Ultraschallsensor (13).

2. Vorrichtung nach Anspruch 1;
**dadurch gekennzeichnet,**
**dass** die Kamera eine Datamatrix-Kamera (19, 25) ist, die zur Beleuchtung des Detektionsfeldes von einer kreisförmig angeordneten Vielzahl von LEDs (23) umgeben ist, wobei die Data-matrix-Kamera (25) gegen Streulicht mittels eines Zylinders (24) abgeschirmt ist, und wobei jede LED (23) zusätzlich von einem ringförmigen Reflektor (22) umgeben ist.

3. Vorrichtung nach Anspruch 1 oder 2;
**dadurch gekennzeichnet,**
**dass** sie eine Ladematte (26) zur induktiven Abgabe elektrischer Energie mit einem zur Lageerfassung dienenden Marker umfasst.

4. Verfahren zur Orientierung für automatisch in Werkshallen geführte, elektrisch betriebene, Transportfahrzeuge, insbesondere so genannte AGV's (automatic guided vehicles), mit einem Laser-Scanner (9) und einem Lichtfeldsensor (21), **dadurch gekennzeichnet, dass**
a) eine Leitzentrale in einer Werkshalle einem bestimmten Transportfahrzeug den Auftrag gibt, ein aufgenommenes Lastregal (10) nach einer vorgegebenen Routenplanung zu einem bestimmten Zielort zu transportieren, wobei kleinere potentielle Hindernisse bei der Vorwärtsfahrt von einem vorderen Ultraschallsensor (20) und bei einer Rückwärtsfahrt von einem hinteren Ultraschallsensor (13) erfasst werden, und
b) das entsprechende Transportfahrzeug der vorgegebenen Routenplanung von Stützpunkt zu Stützpunkt folgt, wobei entsprechenden Marker der Routenplanung von einer Kamera (6, 19, 25) erfasst und angefahren werden, wobei die Marker nach einem Datamatrixcode ausgestaltet sind, wobei ein Positionsmarker (4) aus einer Anordnung aus neun Datamatrixcodes aufgebaut ist, die in einem Quadrat angeordnet sind, und wobei die Diagonalen von 3 Einzelcodes auf einer Geraden liegen, und wobei die großräumige Orientierung mittels eines Laser-Scanners (9) in Verbindung mit einem Lichtfeldsensor (21) erfolgt, und
c) am Zielort die aufgenommene Last von dem Transportfahrzeug abgesetzt wird.

5. Verfahren nach Anspruch 4,
**dadurch gekennzeichnet,**
**dass** bei Energiemangel des Transportfahrzeugs eine Ladematte (29) zur induktiven Abgabe elektrischer Energie angefahren wird, um die elektrischen Akkumulatoren wieder aufzuladen.

## Claims

1. Orientation device for electrically operated transportation vehicles, automatically guided in factory buildings, in particular what are referred to as AGVs (automatic guided vehicles), having a laser scanner (9) and a light field sensor (21), **characterized by**
a) a camera (6, 19, 25) for identifying reference points of a planned route by means of position markers (4), wherein the position markers (4) are embodied as data matrix code carriers, which are constructed from an arrangement composed of nine data matrix codes (5) which are arranged in a square, and wherein the diagonals of three individual codes are located on a straight line, and
b) a front ultrasound sensor (20) and a rear ultrasound sensor (13).

2. Device according to Claim 1;
**characterized**
**in that** the camera is a data matrix camera (19, 25), which, for illuminating the detection field, is surrounded by a multiplicity of LEDs (23), arranged in a circular shape, wherein the data matrix camera (25) is screened from scattered light by means of a cylinder (24), and wherein each LED (23) is additionally surrounded by an annular reflector (22).

3. Device according to Claim 1 or 2;
**characterized**
**in that** it comprises a charging mat (26) for the inductive delivery of electrical energy with a marker which serves to detect a position.

4. Orientation method for electrically operated transportation vehicles, automatically guided in factory buildings, in particular what are referred to as AGVs (automatic guided vehicles), having a laser scanner (9) and a light field sensor (21), **characterized in that**
a) a control center in a factory building gives a specific transportation vehicle the order to transport a picked-up heavy-load rack (10) to a specific destination according to a predefined planned route, wherein relatively small potential obstacles are detected by a front ultrasound sensor (20) during forward travel, and by a rear ultrasound sensor (13) during rearward travel, and
b) the corresponding transportation vehicle follows the predefined planned route from reference point to reference point, wherein the corresponding markers of the planned route are detected by a camera (6, 19, 25) and driven to, wherein the markers are configured according to a data matrix code, wherein a position marker (4) is constructed from an arrangement composed of nine data matrix codes which are arranged in a square, and wherein the diagonals of three individual codes are located on a straight line, and
wherein the orientation over a large area is carried out in conjunction with a light field sensor (21) by means of a laser scanner (9), and
c) the picked-up load is set down by the transportation vehicle at the destination.

5. Method according to Claim 4,
**characterized**
**in that** when the transportation vehicle is deficient in energy, a charging mat (29) for the inductive delivery of electrical energy is driven to in order to recharge the electrical accumulators.

## Revendications

1. Dispositif permettant d'orienter des véhicules de transport à propulsion électrique guidés automatiquement dans des ateliers d'usine, notamment des véhicules à guidage automatique (AGV : automatic guided vehicles), comportant un laser scanneur (9) et un capteur de champ lumineux (21), **caractérisé par**
a) une caméra (6, 19, 25) permettant l'identification de points de repère d'une planification d'itinéraire au moyen de marqueurs de position (4), dans lequel les marqueurs de position (4) sont réalisés sous la forme de supports de codes matriciels de données constitués d'un ensemble de neuf codes matriciels de données (5) disposés dans un carré, et dans lequel les diagonales de 3 codes individuels se trouvent sur une ligne droite, et
b) un capteur à ultrasons avant (20) et un capteur à ultrasons arrière (13).

2. Dispositif selon la revendication 1 ; **caractérisé en ce que** la caméra est une caméra matricielle de données (19, 25) entourée d'une pluralité de LED (23) disposées en cercle pour éclairer le champ de détection, dans lequel la caméra matricielle de données (25) est protégée de la lumière parasite par un cylindre (24), et dans lequel chaque LED (23) est en outre entourée d'un réflecteur annulaire (22).

3. Dispositif selon la revendication 1 ou 2 ; **caractérisé en ce qu'**il comprend un tapis de charge (26) permettant de délivrer de l'énergie électrique par induction avec un marqueur servant à la détection de position.

4. Procédé permettant d'orienter des véhicules de transport à propulsion électrique guidés automatiquement dans des ateliers d'usine, notamment des véhicules à guidage automatique (AGV : automatic guided vehicles), comportant un laser scanneur (9) et un capteur de champ lumineux (21),
**caractérisé en ce que**
a) un centre de contrôle dans un atelier d'usine demande à un véhicule de transport déterminé de transporter un support de chargement prélevé (10) jusqu'à une destination déterminée selon une planification d'itinéraire prédéfinie, dans lequel des obstacles potentiels plus petits pendant une marche avant sont détectés par un capteur à ultrasons avant (20) et sont détectés pendant une marche arrière par un capteur à ultrasons arrière (13), et
b) le véhicule de transport correspondant suit la planification d'itinéraire prédéfinie de point de repère en point de repère, dans lequel des marqueurs correspondants de la planification d'itinéraire sont détectés par une caméra (6, 19, 25) et un déplacement vers ceux-ci est effectué, dans lequel les marqueurs sont configurés sous la forme d'un code matriciel de données, dans lequel un marqueur de position (4) est constitué d'un ensemble de neuf codes matriciels de données disposés dans un carré, et dans lequel les diagonales de 3 codes individuels se trouvent sur une ligne droite, et dans lequel l'orientation à grande échelle est effectuée au moyen d'un laser scanneur (9) en association avec un capteur de champ lumineux (21), et
c) le chargement prélevé est déposé par le véhicule de transport au lieu de destination.

5. Procédé selon la revendication 4,
**caractérisé en ce qu'**en cas d'insuffisance d'énergie dans le véhicule de transport, un tapis de charge (29) permettant de délivrer de l'énergie électrique par induction est mis en fonctionnement afin de recharger les accumulateurs électriques.
